# EUROPÄISCHE PATENTSCHRIFT

(11) **EP 2 296 941 B1**
(45) Veröffentlichungstag und Bekanntmachung des Hinweises auf die Patenterteilung: **09.01.2013**
(21) Anmeldenummer: 09753708.8
(22) Anmeldetag: 27.03.2009
(51) Int. Cl.: B60R 13/02, B60R 21/215, B32B 27/32

(54) **THERMOPLASTISCHE FOLIE FÜR AIRBAG-ABDECKUNGEN**
THERMOPLASTIC FILM FOR AIRBAG COVERS
FEUILLE THERMOPLASTIQUE POUR RECOUVREMENTS DE COUSSINS DE SÉCURITÉ GONFLABLES

(30) Priorität: 29.05.2008 DE 102008025931
(43) Veröffentlichungstag der Anmeldung: 23.03.2011
(73) Patentinhaber: Benecke-Kaliko AG, 30419 Hannover (DE)
(72) Erfinder: HÜLSEWEDE, Volker, 73114 Schlat (DE); BÜHRING, Jürgen, 30900 Wedemark (DE)
(74) Vertreter: Finger, Karsten
(86) Internationale Anmeldenummer: PCT/EP2009/053667
(87) Internationale Veröffentlichungsnummer: WO 2009/144053

(56) Entgegenhaltungen:
- EP-A- 1 403 148
- EP-A- 1 584 466
- GB-A- 2 277 908
- US-A1- 2006 226 638

## Beschreibung

Die Erfindung betrifft eine Thermoplastische Kunststoff-Folie zur Innenverkleidung von Kraftfahrzeugen, bestehend aus einer nicht geschäumten Deckschicht mit einer dreidimensional strukturierten Oberfläche und mindestens einer weiteren an der Unterseite der Deckschicht sich anschließenden nicht geschäumten Unterschicht. Nicht geschäumte Schichten werden auch als "kompakte Schichten" bezeichnet; eine aus einer oder mehreren nicht geschäumten Schichten bestehende Folie wird im Fachbereich auch "Kompaktfolie" genannt.

Thermoplastische Kunststoff-Folien als Formteile, Formfolien oder - häute, oder Walzfolien für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt und bestehen üblicherweise aus einer ein- oder mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

An die kompakte obere Schicht mit der geprägten Oberfläche, nämlich der Deck- oder Dekorschicht, schließt auf der Unterseite der Deckschicht oft eine auflaminierte / aufgeklebte Schaumschicht niedriger Dichte an, die eine ansprechende Haptik, d.h. eine angenehm "weiche" Griffigkeit des Bezuges bereitstellt.

Sowohl die Deckschicht als auch die Schaumschicht der Formteile /Formfolien können dabei aus unterschiedlichen Zusammensetzungen und unterschiedlichen Basisrohstoffen bestehen, also etwa aus Kunststoffen wie PVC (Polyvinylchlorid), PP (Polypropylen), TPO (Polyolefin) etc. oder einer Kombination aus solchen oder ähnlichen Materialien.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten. Ein Beispiel dafür ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff " narbgebendes Negativtiefziehen" übersetzen. Im Gegensatz zum Standardtiefziehverfahren, bei dem das Einformen in die dreidimensionale, bauteil-geometrische Struktur durch das Einfahren eines die spätere Bauteilkontur bildenden Tiefziehstempels in die Folie erfolgt, wird beim Negativtiefziehen eine Folie in eine Negativform hineingezogen, beispielsweise durch Vakuum. Das narbgebende Negativtiefziehen ist dabei eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Für das nachfolgende Aufbringen der Formhäute auf einen Armaturenbrett-Träger oder auf ein vorgefertigtes, z.B. aus faserverstärkter Pappe hergestelltes Trägerteil für einen Seitentür-Einsatz, kennt man neben dem Tiefziehen eine Reihe weiterer Umformverfahren, wie etwa Drück- oder Pressverfahren, bei denen die Folie gegen Formen bzw. gegen die genannten Träger gepresst wird und ihre Bauteilform erhält.

Der Einsatz solcher Formhäute als Abdeckung eines "Airbags", d.h. im Bereich eines über Auslösegeräte/Auslöseeinrichtungen durch Gas im Falle eines Unfalls aufgeblasenen Luftsacks, ist dabei im Stand der Technik nur dann möglich, wenn die Folie, die z.B. das gesamte Armaturenbrett und damit auch die Abdeckungen über den Auslöseeinrichtungen des Airbags bedeckt, zum Aufreißen beim Entfalten des Airbags entlang einer Naht/Aufreißnaht geschwächt wird. Diese Schwächung erfolgt im Stand der Technik durch verschiedene Arten nachträglicher Bearbeitung.

Die DE 100 55 546 C2 offenbart hierzu ein Verfahren zur Erzeugung von entlang einer Sollbruchlinie verlaufenden Schwächungsstrukturen, bei dem auf der Rückseite der Airbag-Verkleidung / der thermoplastischen Folie mit einer Klinge als Schneid- und Stanzwerkzeug Aufreißnähte dadurch angeordnet werden, das die Klinge entlang einer Aufreißlinie verfahren und mit einer bestimmten Taktrate in die Airbag-Verkleidung eingestoßen und wieder herausgezogen wird.

Bekannt ist auch die Herstellung von Sollbruchlinien durch eine Laserstrahlbehandlung, bei dem ein Laserstrahl einen Teil der Foliendicke verbrennt bzw. schneidet. So offenbart die DE 196 36 428 A1 eine Vorrichtung, welche einen Laser zur Erzeugung von Schwächungsstrukturen in Form von Perforationslinien aufweist. Dabei werden in vorgegebenen Abständen Sacklöcher in die Airbagverkleidung eingebrannt.

Nachteilig ist in beiden offenbarten Verfahrensweisen, dass im Allgemeinen die rückseitig erzeugte Materialschwächung im Lauf der Zeit auch auf der Außenseite durch einen Material-Rückfall sichtbar wird.

Die EP 1 518 662 A1 zeigt ein Verfahren zur Herstellung einer Schwächungslinie in einer Airbag-Abdeckung, bei dem über eine auf die Abdeckung/Folie aufgesetzte Sonotrode eine Wärmeerzeugung durch Ultraschall erfolgt, die in einer textilen Außenschicht der Abdeckung eine mechanische Schwächung erzeugt, die aber die an sich vorhandene textile Oberflächenstruktur nur wenig stören soll, vermutlich dadurch, dass das Muster der Sollbruchlinie im Textilmuster nicht sonderlich auffällt. Bei z. B. Kunstlederoberflächen wäre hier jedoch eine deutlich auffällige Schwächungslinie zu erkennen.

US 2006/0226638 A1 beschreibt eine Thermoplastische Kunststoff-Folie gemäß dem Oberbegriff der Anspruchs 1.

Da im Bereich des Automobilinterieurs ein starker Trend zur Verbesserung der Qualitätsanmutung zu beobachten ist, sind weder die einen noch die anderen Unregelmäßigkeiten in den sichtbaren Oberflächenbereichen akzeptabel.

Auf der anderen Seite kommt es ohne solche Schwächungen im Bereich der Airbag-Abdeckungen bei einer Airbagauslösung oft vor dem Aufreißen zu einer überaus hohen Dehnung der Kunststoffhaut, der so genannten Ballon-Bildung, im Fachbereich auch als "ballooning" oder "Verdämmung" bekannt. Zum Aufreißen benötigt man dann eine sehr hohe Kraft. Beides führt zu einer Verzögerung des Aufreißens damit zu einer ungewünschten Verlängerung der Öffnungszeit des Airbags.

Der Erfindung lag die Aufgabe zugrunde, eine thermoplastische Folie bereitzustellen, die ohne Qualitätsverlust für Verformungsvorgänge, wie z.B. Tiefziehen geeignet ist, die eine hochwertige Anmutung der Oberfläche besitzt und auch ohne umfangreiche Zusatzbearbeitung im Bereich von Airbag-Auslösern einsetzbar ist und im Falle einer Airbag-Auslösung problemlos und schnell aufreißt.

Gelöst wird diese Aufgabe durch die Merkmale des Hauptanspruchs. Weitere vorteilhafte Ausbildungen sind in den Unteransprüchen offenbart. Ebenso werden ein Innenverkleidungsteil mit einer solchen Folie und ein Verfahren zu dessen Herstellung offenbart.

Dabei weist das Kunststoffmaterial der Unterschicht eine im Vergleich zum Kunststoffmaterial der Deckschicht reduzierte Kettenlänge seiner Molekülketten auf. Durch eine solche Reduzierung der Kettenlänge in der Unterschicht erniedrigt sich deren Elastizitätsmodul bzw. deren elastischer Anteil bei einer mechanischen Verformung. Bei einer Airbagauslösung führt dies durch die geringere Dehnfähigkeit der Unterschicht zu einer Verringerung der Aufreißkraft, zu einem wesentlich schnelleren Aufreißen, d.h. zu einer kürzeren Öffnungszeit für das erste Aufreißen der Folie und damit zu einem viel schnelleren Aufblasen des Airbags. Während im Stand der Technik hier durchaus schon Zeiten von 15 msec (Millisekunden) gemessen wurden, liegt die Öffnungszeit für das erste Aufreißen bei der erfindungsgemäßen Kunststoff-Folie bei nur ca. 6 bis 7 msec. Mit der erfindungsgemäßen Ausbildung der Kunststoff-Folie kann man also auf das Einbringen von Schwächungslinien verzichten. Der erfindungsgemäße Aufbau führt dazu, dass bei ausgelöstem Airbag-Generator die Folie ohne Probleme aufreißt und ein schnelles Aufblasen des Airbags ermöglicht.

Unter verschiedenen anderen Größen ist der nach DIN/ISO 1133 zu bestimmende Schmelzflussindex, im Fachbereich MFI (Melt Flow Index) genannt, einer der Indikatoren für die Molekülkettenlänge von Kunststoffen und damit auch eine der Stellgrößen für die Herstellung solcher Kunststoffe. Eine vorteilhafte Ausbildung der Erfindung besteht daher darin, dass das Kunststoffmaterial der Unterschicht einen im Vergleich zum Kunststoffmaterial der Deckschicht erhöhten Schmelzflussindex (MFI) aufweist. Der Schmelzflussindex in g/10 Min bei vorgegebener Temperatur verhält sich umgekehrt proportional zur Kettenlänge der Moleküle. Ein niedriger Schmelzflussindex ist damit ein Maß für das Vorhandensein langer bzw. längerer Molekülketten, ein hoher Schmelzflussindex für das Vorhandensein kürzerer Molekülketten.

Eine weitere vorteilhafte Ausbildung besteht darin, dass das Kunststoffmaterial der Unterschicht einen Schmelzflussindex (MFI) von mindestens 4 g/10 min und die Deckschicht einen Schmelzflussindex (MFI) von höchstens 1 g/10 min aufweist, jeweils bei 230 °C und 2,16 Kg Belastung nach DIN/ISO 1133. Diese Bedingungen liegen auch den im Übrigen erwähnten Bestimmungen des Schmelzflussindex zu Grunde. Eine solche Einstellung des Schmelzflussindex von Deckschicht und Unterschicht führt zu der oben bereits dargestellten gewünschten kurzen Öffnungszeit für das erste Aufreißen bei der erfindungsgemäßen Kunststoff-Folie von etwa 7 msec.

Eine weitere vorteilhafte Ausbildung besteht darin, dass das Kunststoffmaterial der Unterschicht einen Schmelzflussindex (MFI) von maximal 12 g/10 min aufweist. Mit einer solchen Obergrenze für den Schmelzflussindex vermeidet man die Gefahr, dass bei sehr niedrigen Umgebungstemperaturen, bei denen Kunststoffe mit kurzen Molekülketten eher zu Sprödbruch neigen als Kunststoffe mit langen Molekülketten, die Kunststoff-Folie beim Aufreißen splittert.

Weitere vorteilhafte Ausbildungen bestehen darin, dass das Kunststoffmaterial der Unterschicht oder der Deckschicht aus einem thermoplastischen Polyolefin besteht. Thermoplastische Polyolefine, lassen sich besonders gut bei Ihrer Herstellung und Verarbeitung im Hinblick auf ihre Molekülkettenlänge beeinflussen.

Eine weitere vorteilhafte Ausbildung besteht darin, dass dass die Deckschicht und die Unterschicht jeweils eine Dicke von 0.2 bis 0.7 mm aufweisen, vorzugsweise eine Dicke von 0,4 bis 0,7 mm. Durch eine solche Ausbildung der Schichtdicken ergibt sich im Zusammenwirken mit der Kettenlänge der einzelnen Schichten eine weitere Optimierung im Hinblick auf das sichere Öffnen in einer kurzen Aufreißzeit von ca. 6 msec.

Besonders geeignet ist eine solche thermoplastischen Kunststoff-Folie für ein Innenverkleidungsteil für ein Kraftfahrzeug, etwa für Verkleidungsteile, unter denen Seiten- oder Kopf-Airbags mit den entsprechenden Auslöseeinrichtungen angebracht sind, insbesondere natürlich als Airbag-Abdeckung für ein Armaturenbrett.

Ein besonders geeignetes Verfahren zur Herstellung eines Innenverkleidungsteiles oder Armaturenbrettes mit einer erfindungsgemäßen Kunststoff-Folie besteht darin, dass die nicht geschäumte Deckschicht und die nicht geschäumte Unterschicht auf einen der Bauteilform entsprechenden Träger aufgebracht werden, wobei zwischen Unterschicht und Träger eine weitere geschäumte Schicht als Zwischenlage aufgebracht ist. Die Schaumschicht reißt bei eine Airbag-Auslösung im Wesentlichen ohne merkbare Dehnung, wonach die Einstellung der Öffnungszeit maßgeblich durch Deckschicht und Unterschicht der Kompaktfolie erreicht wird.

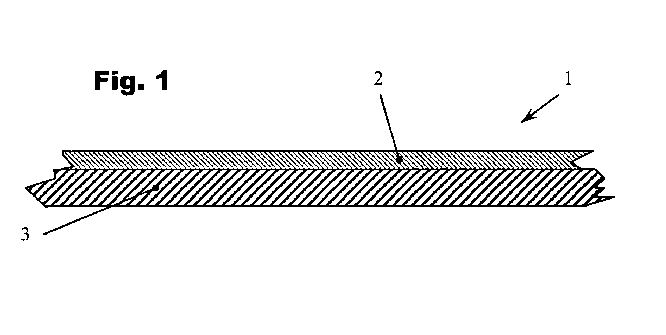

Anhand eines Ausführungsbeispieles soll die Erfindung näher erläutert werden. Die Fig. 1 zeigt den Aufbau einer thermoplastischen Kunststoff-Folie 1 aus Polyolefin für die Airbag-Abdeckung eines Armaturenbrettes für ein Kraftfahrzeug. Die Kunststoff-Folie 1 besteht aus einer nicht geschäumten Deckschicht 2 mit einer dreidimensional strukturierten Oberfläche und mit einer weiteren an der Unterseite der Deckschicht sich anschließenden nicht geschäumten Unterschicht 3. Das Kunststoffmaterial der Unterschicht 3 weist eine im Vergleich zum Kunststoffmaterial der Deckschicht 2 reduzierte Kettenlänge seiner Molekülketten auf.

Das Kunststoffmaterial der Unterschicht 3 weist einen Schmelzflussindex (MFI) von 6 g/10 min auf, während die Deckschicht 2 einen Schmelzflussindex von 1 g/10 min aufweist.

Die Deckschicht 2 weist eine Schichtdicke auf von 0,2 mm, die Unterschicht 3 eine Dicke von 0,5 mm.

### Bezugszeichenliste

### (Teil der Beschreibung)

- 1: Thermoplastische Kunststoff-Folie
- 2: Deckschicht
- 3: Unterschicht

## Patentansprüche

1. Thermoplastische Kunststoff-Folie (1) zur Innenverkleidung von Kraftfahrzeugen, bestehend aus einer nicht geschäumten Deckschicht (2) mit einer dreidimensional strukturierten Oberfläche und mindestens einer weiteren an der Unterseite der Deckschicht sich anschließenden nicht geschäumten Unterschicht (3), **dadurch gekennzeichnet, dass** das Kunststoffmaterial der Unterschicht (3) eine im Vergleich zum Kunststoffmaterial der Deckschicht (2) reduzierte Kettenlänge seiner Molekülketten aufweist.

2. Thermoplastische Kunststoff-Folie nach Anspruch 1, bei der das Kunststoffmaterial der Unterschicht (3) einen im Vergleich zum Kunststoffmaterial der Deckschicht (2) erhöhten Schmelzflussindex (MFI) aufweist.

3. Thermoplastische Kunststoff-Folie nach Anspruch 1 oder 2, bei der das Kunststoffmaterial der Unterschicht (3) einen Schmelzflussindex (MFI) von mindestens 4 g/10 min und die Deckschicht einen Schmelzflussindex (MFI) von höchstens 1 g/10 min aufweist.

4. Thermoplastische Kunststoff-Folie nach einem der Ansprüche 1 bis 3, bei der das Kunststoffmaterial der Unterschicht (3) einen Schmelzflussindex (MFI) von maximal 12 g/10 min aufweist.

5. Thermoplastische Kunststoff-Folie nach einem der Ansprüche 1 bis 4, bei der das Kunststoffmaterial der Unterschicht (3) aus einem thermoplastischen Polyolefin besteht.

6. Thermoplastische Kunststoff-Folie nach einem der Ansprüche 1 bis 5, bei der das Kunststoffmaterial der Deckschicht (2) aus einem thermoplastischen Polyolefin besteht.

7. Thermoplastische Folie nach Anspruch 1 bis 4, **dadurch gekennzeichnet, dass** die Deckschicht (2) und die Unterschicht (3) jeweils eine Dicke von 0.2 bis 0.7 mm aufweisen, vorzugsweise eine Dicke von 0,4 bis 0,7 mm.

8. Innenverkleidungsteil für ein Kraftfahrzeug mit einer thermoplastischen Kunststoff-Folie nach einem der Ansprüche 1 bis 7.

9. Armaturenbrett für ein Kraftfahrzeug mit einer thermoplastischen Kunststoff-Folie nach einem der Ansprüche 1 bis 7 als Airbag-Abdeckung.

10. Verfahren zur Herstellung eines Innenverkleidungsteiles oder Armaturenbrettes mit einer Kunststoff-Folie nach einem der Ansprüche 1 bis 7, bei dem die nicht geschäumte Deckschicht (2) und die nicht geschäumte Unterschicht (3) auf einen der Bauteilform entsprechenden Träger aufgebracht werden, wobei zwischen Unterschicht (3) und Träger eine weitere geschäumte Schicht als Zwischenlage aufgebracht ist.

## Claims

1. Thermoplastic film (1) for the internal cladding of motor vehicles, composed of an unfoamed outer layer (2) with a three-dimensionally structured surface and at least one further unfoamed underlayer (3) in contact with the underside of the outer layer, **characterized in that** the plastics material of the underlayer (3) has, in comparison with the plastics material of the outer layer (2), a reduced chain length of its molecular chains.

2. Thermoplastic film according to Claim 1, in which the plastics material of the underlayer (3) has, in comparison with the plastics material of the outer layer (2), an increased melt flow index (MFI).

3. Thermoplastic film according to Claim 1 or 2, in which the plastics material of the underlayer (3) has a melt flow index (MFI) of at least 4 g/10 min and the outer layer has a melt flow index (MFI) of at most 1 g/10 min.

4. Thermoplastic film according to any of Claims 1 to 3, in which the plastics material of the underlayer (3) has a melt flow index (MFI) of at most 12 g/10 min.

5. Thermoplastic film according to any of Claims 1 to 4, in which the plastics material of the underlayer (3) is composed of a thermoplastic polyolefin.

6. Thermoplastic film according to any of Claims 1 to 5, in which the plastics material of the outer layer (2) is composed of a thermoplastic polyolefin.

7. Thermoplastic film according to any of Claims 1 to 4, **characterized in that** the thickness of the outer layer (2) and of the underlayer (3) is respectively from 0.2 to 0.7 mm, preferably from 0.4 to 0.7 mm.

8. Internal cladding part for a motor vehicle with a thermoplastic film according to any of Claims 1 to 7.

9. Dashboard for a motor vehicle with a thermoplastic film according to any of Claims 1 to 7, as airbag covering.

10. Process for producing an internal cladding part or dashboard with a plastics film according to any of Claims 1 to 7, by applying the unfoamed outer layer (2) and the unfoamed underlayer (3) to a support corresponding to the shape of the component, where there is a further foamed layer as intermediate ply applied between underlayer (3) and support.

## Revendications

1. Feuille de matière plastique thermoplastique (1) pour l'habillage intérieur de véhicules automobiles, se composant d'une couche de recouvrement non expansée (2) avec une surface à structure tridimensionnelle et au moins une autre sous-couche non expansée (3) se raccordant à la face inférieure de la couche de recouvrement, **caractérisée en ce que** la matière plastique de la sous-couche (3) présente une longueur de chaîne de ses chaînes moléculaires réduite par comparaison avec la matière plastique de la couche de recouvrement (2).

2. Feuille de matière plastique thermoplastique selon la revendication 1, dans laquelle la matière plastique de la sous-couche (3) présente un indice de fusion (MFI) accru par comparaison avec la matière plastique de la couche de recouvrement (2).

3. Feuille de matière plastique thermoplastique selon la revendication 1 ou 2, dans laquelle la matière plastique de la sous-couche (3) présente un indice de fusion (MFI) d'au moins 4 g/10 min et la couche de recouvrement présente un indice de fusion d'au plus 1 g/10 min.

4. Feuille de matière plastique thermoplastique selon l'une quelconque des revendications 1 à 3, dans laquelle la matière plastique de la sous-couche (3) présente un indice de fusion (MFI) de 12 g/10 min au maximum.

5. Feuille de matière plastique thermoplastique selon l'une quelconque des revendications 1 à 4, dans laquelle la matière plastique de la sous-couche (3) est composée de polyoléfine thermoplastique.

6. Feuille de matière plastique thermoplastique selon l'une quelconque des revendications 1 à 5, dans laquelle la matière plastique de la couche de recouvrement (2) est composée d'une polyoléfine thermoplastique.

7. Feuille de matière plastique thermoplastique selon l'une quelconque des revendications 1 à 4, **caractérisée en ce que** la couche de recouvrement (2) et la sous-couche (3) présentent chacune une épaisseur de 0,2 à 0,7 mm, de préférence une épaisseur de 0,4 à 0,7 mm.

8. Pièce d'habillage intérieur pour un véhicule automobile avec une feuille de matière plastique thermoplastique selon l'une quelconque des revendications 1 à 7.

9. Tableau de bord pour un véhicule automobile avec une feuille de matière plastique thermoplastique selon l'une quelconque des revendications 1 à 7 comme recouvrement de coussin de sécurité gonflable.

10. Procédé de fabrication d'une pièce d'habillage intérieur ou d'un tableau de bord avec une feuille de matière plastique thermoplastique selon l'une quelconque des revendications 1 à 7, dans lequel on dépose la couche de recouvrement non expansée (2) et la sous-couche non expansée (3) sur un support correspondant à la forme du composant, dans lequel on dépose une autre couche expansée comme couche intermédiaire entre la sous-couche (3) et le support.
